# EUROPÄISCHE PATENTANMELDUNG

(11) **EP 1 114 688 A2**
(43) Veröffentlichungstag der Anmeldung: **11.07.2001**
(21) Anmeldenummer: 01100272.2
(22) Anmeldetag: 03.01.2001
(51) Int. Cl.: B23K 7/10

(54) **Sicherheitsventil für die Sauerstoff- und Brenngasversorgung eines Schneid- und Schweissbrenners**

(30) Priorität: 06.01.2000 DE 10000164
(71) Anmelder: DI-WA Lock GmbH, 41065 Mönchengladbach (DE)
(72) Erfinder: Wagels, Hans-Dieter, 52511 Geilenkirchen (DE); Goebels, Stefan, 41263 Mönchengladbach (DE); Lüpges, Peter, 41065 Mönchengladbach (DE)
(74) Vertreter: Schulte, Jörg, Dipl.-Ing.

(57) **Zusammenfassung**

Ein Sicherheitsventil für die Sauerstoff- und Brenngasversorgung eines Schneid- und Schweißbrenners läßt sich pneumatisch überwachen und regeln, indem ein Steuerorgan 9 in Abhängigkeit des herrschenden Sauerstoffdruckes die Brenngaszufuhr überwacht. Als Steuerorgan 9 kann beispielsweise eine Membrane 11 vorgesehen sein, die sich bei ausreichendem Sauerstoffdruck gegen ein Brenngaskanalventil 15 verschiebt, das daraufhin den Brenngaskanal 8 freigibt, so dass Brenngas strömen kann. Neben dem Verhindern eines Rückschlagens der Flamme ist so stets gewährleistet, dass die Strömungsreihenfolge, Sauerstoff vor Brenngas beim Aufdrehen und Brenngas vor Sauerstoff beim Zudrehen, eingehalten wird.

## Beschreibung

Die Erfindung betrifft ein Sicherheitsventil für die Sauerstoff- und Brenngasversorgung eines Schneid- bzw. Schweissbrenners, dessen Ventilgehäuse einen Sauerstoffeinlass und einen damit über einen Sauerstoffkanal verbundenen Sauerstoffauslass sowie einen Brenngaseinlass und einen damit über einen Brenngaskanal verbundenen Brenngasauslass aufweist.

Ein derartiges Sicherheitsventil kann beispielsweise beim autogenen Brennschneiden eingesetzt werden. Es ist zwischen Sauerstoff- bzw. Brenngasversorgung einerseits und Mischeinrichtung andererseits angeordnet und weist jeweils einen Einlass- und Auslass für Sauerstoff und Brenngas auf. Bei bekannten Einrichtungen soll durch aufwendige Maßnahmen eine Konstanz des aus der Mischeinrichtung ausströmenden Sauerstoff-/Brenngasgemisches erreicht werden. Dabei gilt es gleichzeitig zu verhindern, dass es im Falle eines falsch eingestellen Saustoff-/Brenngasgemisches zu einer Verpuffung und einem darauf folgenden Flammenrückschlag in den Brenner kommt. Zu solchen Unfällen kommt es immer wieder aufgrund mangelnder Fachkenntnis und fehlender Konzentration bei der Arbeit mit handelsüblichen Schneid- und Schweißbrennern, insbesondere dann, wenn die korrekte Reihenfolge beim Auf- bzw. Zudrehen der beiden Ventilknöpfe für Sauerstoff und Brenngas nicht eingehalten wird. Neben der Gefährdung für das Personal kommt es zu Beschädigungen der Brenner, Schläuche, Gasbehälter oder der Armaturen. Aus der DE-OS 27 51 462 ist ein Mehrwege-Schließhahn mit Schnellverschluss bekannt, bei dem das Steuerorgan aus einer drehbaren und axial zwischen zwei Endstellungen verschieblichen Nockenwelle besteht, wobei Nocken unterschiedlichen Durchmessers jeweils dem Sauerstoff- und dem Brenngasventil zugeordnet sind. Damit soll gewährleistet werden, dass sich die Ventile stets in der richtigen Reihenfolge öffnen. Eine Dosierung des Verhältnisses zwischen Sauerstoff und Brenngas ist mit einem solchen Schließhahn allerdings genauso wenig möglich wie das Verhindern von Brenngasaustritt in dem Fall, dass die Sauerstoffversorgung ausbleibt oder unterbrochen wird, zumal für Sauerstoff- und Brenngasversorgung jeweils ein separates Ventil vorgesehen ist und sich beide Ventile nicht gegenseitig beeinflussen können. Die EP 7 02 194 stellt ein Gas/Luft-Mischventil für Brenner ebenfalls mit zwei separaten Ventilkörpern vor, wobei das eine Ventil im Zuluftkanal für die Verbrennungsluft und das andere Ventil im Gaszufuhrkanal angeordnet ist. Beide Ventile sind jeweils an gegenüberliegenden Stirnseiten der Mischkammer angeordnet und aus unterschiedlicher Richtung angeströmt. Ein Druckregler in der Gaszufuhrleitung führt den Einlassgasdruck dem Einlassluftdruck derart nach, dass die Stellung der Ventilkörper von der Druckdifferenz zwischen den Drücken am Lufteinlass und am Ventilauslass abhängt. Damit soll ein einmal eingestelltes Gas/Luft-Verhältnis unabhängig von der jeweiligen Stellung des Doppelventilkörpers eingehalten werden. Daran ist nachteilig, dass das Abstimmen zweier separater Ventilkörper aufeinander, zumal wenn sie in entgegengesetzter Richtung angeordnet sind, äußerst kompliziert und störungsanfällig ist. Gerade bei unterschiedlichen Anforderungen und Arbeiten mit einem Brennschneider muss dieser praktisch bei Beginn jeder Arbeit neu ausjustiert werden. Auch bei nicht ausreichendem Sauerstoffdruck kommt es zudem bei diesem Ventil zu einer Durchmischung von Luft und Gas anstatt zu einem hier sinnvollen Abschalten des Gerätes. Außerdem ist bei einem derartigen Ventil keine zuverlässige Trennung zwischen Luft-, Gaszuführung und Mischkammer gewährleistet, so dass es hierbei immer wieder zu gefährlichen Störungen des Funktionsablaufes kommen kann.

Der vorliegenden Erfindung stellt sich somit die Aufgabe, ein Sicherheitsventil zu schaffen, das ein Auf- und Abdrehen von Sauerstoff und Brenngas in der korrekten Reihenfolge sowie eine exakte Einstellung des Gemisches ermöglicht und bei nicht ausreichendem Sauerstoffdruck einen Brenngasaustritt verhindert.

Diese Aufgabe wird dadurch gelöst, dass zwischen Sauerstoffkanal und Brenngaskanal ein Steuerorgan vorgesehen ist, welches den Brenngaskanal in Abhängigkeit vom herrschenden Sauerstoffdruck öffnend angeordnet und ausgebildet ist.

Dieses Sicherheitsventil gewährleistet, dass die Brenngaszuführung zur Mischeinrichtung nur bei ausreichend vorhandenem Sauerstoffdurchfluss bzw. -druck erfolgen kann, wobei eine exakte Dosierung des Gemisches vorgegeben werden kann. Dazu ist zwischen Sauerstoff- und Brenngaskanal ein Steuerorgan angeordnet, das diese voneinander trennt. Das Steuerorgan ist so ausgebildet und angeordnet, dass es den Durchfluss von Brenngas im Brenngaskanal anhand des im Sauerstoffkanal herrschenden Durchflusses bzw. Druckes direkt oder indirekt überwacht. Damit findet eine pneumatische Überwachung im Ventilgehäuse statt, da das Brenngas im Brenngaskanal nicht freigegeben werden kann, wenn Sauerstoffdruck oder -menge zu niedrig sind, weil die Sauerstoffversorgung ausgefallen oder unterbrochen ist. Bereits beim Absinken des Sauerstoffdruckes unter eine gewisse vorgegebene Druckgrenze schließt sich das Ventil. Erst bei ausreichendem Sauerstoffdruck wird das Brenngas wieder freigegeben, so dass die Flamme wieder gefahrlos entzündet werden kann, weil verhindert ist, dass durch die niedrige Ausströmgeschwindigkeit des Brenngases die Flamme in den Brenner zurückschlägt. Der in der Praxis häufig auftretende Irrtum, dass es zum Ausströmen von Brenngas ohne Sauerstoff kommt, was mit der Gefahr einer Verpuffung und einen darauf folgenden Flammenrückschlag in den Brenner verbunden ist, kann damit nicht auftreten. Damit bleiben Verletzungen des Personals und Zerstörungen des Brenners, der Zuführschläuche, der Gasflaschen oder Armaturen vermieden.

Eine besonders geeignete Ausführungsform der Erfindung ist die, bei der als Steuerorgan mindestens eine Membrane vorgesehen ist, welche in einer Verbindungskammer oder einem Verbindungskanal zwischen Sauerstoffkanal und Brenngaskanal angeordnet ist, wobei die Membrane auf ein im Brenngaskanal angeordnetes Brenngaskanalventil einwirkend ausgebildet ist. Im Querschitt einer Verbindungskammer bzw. eines Verbindungskanals zwischen Sauerstoffkanal und Brenngaskanal ist eine diesen abdichtende Membrane angeordnet. In Abhängigkeit des im Sauerstoffkanal herrschenden Druckes verformt sich diese Membrane in Richtung Brenngaskanal, wo das Brenngaskanalventil so angeordnet ist, dass es den Querschnitt des Brenngaskanals und damit die Freigabe des Brenngases so lange blockiert, bis ausreichender Sauerstoffdruck vorhanden ist. Daraufhin verschiebt sich der Ventilstößel aus dem Brenngaskanal heraus, so dass Brenngas in vorgegebener Menge in Abhängigkeit vom herrschenden Sauerstoffdurchfluss strömen kann. Damit ist zugleich gewährleistet, dass Sauerstoff und Brenngas stets in korrekter Reihenfolge, also Sauerstoff vor Brenngas, geöffnet bzw. Brenngas vor Sauerstoff geschlossen werden. Bei einem Abfall des Sauerstoffdrucks kehrt das Brenngaskanalventil augenblicklich aufgrund der Rückverformung der Membrane in die blockierende Position zurück. Dies kann der Fall sein aufgrund einer gezielter Abschaltung des Sicherheitsventiles oder auch im Falle eines Defektes, beispielsweise einer Leitung. Sollte das geschehen, verformt sich die Membrane wieder in Richtung Sauerstoffkanal zurück und das Brenngaskanalventil blockiert wiederum den Brenngaskanal. Zusätzliche Einstellungen oder Justierungen an der Mischdüse selbst brauchen von daher nicht mehr vorgenommen zu werden.

Es hat sich herausgestellt, dass der durch die Membrane bewirkte Schaltvorgang besonders schnell und zuverlässig abläuft, wenn im Bereich der Mitte der Membrane ein auf das Brenngaskanalventil einwirkender Verstellknopf vorgesehen ist. Dabei handelt es sich vorzugsweise um ein Kunststoffbauteil in der Art eines Knopfes, welcher so ausgebildet ist, dass die Kraft gut von der Membrane auf das Brenngaskanalventil und umgekehrt übertragen werden kann. Der Verstellknopf ist zweckmäßigerweise korrespondierend zum Ventilkopf ausgebildet, so dass eine gute und schnelle Übertragung der Kraft bewirkt wird.

Als weitere Verbesserung wird vorgeschlagen, dass zwischen Verstellknopf und Brenngaskanalventil eine weitere, dem Brenngaskanalventil zugeordnete Membrane vorgesehen ist. Es sind also zwei, durch einen Abstandsring voneinander getrennte Membranen hintereinander in der Verbindungskammer bzw. dem Verbindungskanal angeordnet, so dass eine noch bessere Kraftübertragung vom Verstellknopf auf den Ventilkopf ermöglicht ist. Der Durchmesser der zweiten Membrane, bzw. der Durchmesser der Verbindungskammer in diesem Bereich ist gegenüber der ersten Membrane verkleinert.

Es ist vorgesehen, dass im Bereich des Übergangs zwischen Sauerstoffkanal und Verbindungskammer ein Kugelventil angeordnet ist, welches über ein Steuerorgan, vorzugsweise einen Sperrdrehbolzen betätigbar ist. Bei Öffnen des Sperrdrehbolzens wird das Kugelventil so verstellt, dass der durch den Sauerstoffkanal strömende Sauerstoff zusätzlich in Verbindungskammer bzw. -kanal gelangt und dort eine Deformierung der Membrane bewirkt. Dieses Steuerorgan wirkt also als Ein-/Ausschalter, während ein weiteres Bauteil wie ein Drehbolzen als Regulier- bzw. Justiereinrichtung dient. Allerdings könnte der Sperrdrehbolzen auch als Steuerorgan ausgebildet sein, so dass in Abhängigkeit von dessen Öffnungsstellung der Sauerstoff strömt und beim Erreichen eines entsprechenden Mindestdruckes die Verformung der Membrane eintritt, woraufhin der Brenngaskanal freigegeben wird.

Zur Verbesserung der Funktion des Brenngaskanalventils ist vorgesehen, dass das Brenngaskanalventil in Längsverschiebungsrichtung federnd gelagert ist. Ist ausreichender Sauerstoffdruck vorhanden und wird das Brenngaskanalventil durch Verformung der Membrane bzw. durch den Verstellknopf in seiner Längsrichtung verschoben, so geschieht dies vorteilhafterweise gegen die Kraft einer Feder, die bei Absinken des Druckes wiederum ein augenblickliches Schließen des Brenngaskanalventils und damit des Brenngaskanals bewirkt.

Zweckmäßigerweise ist das Brenngaskanalventil gegenüber einer Ventilhülse verschieblich geführt, die im Bereich des Brenngaskanals angeordnet ist. Hierzu weist die Ventilhülse entsprechende Bohrungen auf, die ein Strömen der Brenngases ermöglichen. Die Ventilhülse bzw. Brenngaskanalventil weisen entsprechende Dichtungen auf, beispielsweise O-Ringe, um ein Strömen von Brenngas in der Blockadeposition zu verhindern. In Abhängigkeit vom eingestellten Mindestsauerstoffdruck verschiebt sich das Brenngaskanalventil aus dieser Position und gibt den Brenngaskanal zumindest teilweise frei, je nachdem welches Mischverhältnis eingestellt ist.

Weiterhin ist vorgesehen, dass der Sauerstoffkanal Entlüftungsbohrungen aufweist. Diese dienen dazu, im Falle eines notwendigen abrupten Abschaltens des Gerätes ein augenblickliches Entweichen des Sauerstoffs aus dem Bereich des Sauerstoffkanals zu ermöglichen, so dass es nicht zu einer Verzögerung kommen kann, die schlimmstenfalls einen Rückschlag der Flamme in Richtung Ventil auslösen könnte. Somit kann die Membrane entsprechend schneller schalten, weil der Sauerstoff aus dem Sauerstoffkanal verdrängt wird.

Alternativ zur Ausbildung einer Membrane wird vorgeschlagen, dass als Steuerorgan ein Steuerkolben vorgesehen ist, welcher in einer Kolbenkammer zwischen Sauerstoffkanal und Brenngaskanal angeordnet ist und welcher mit seinem dem Brenngaskanal zugewandten Ende den Durchfluss im Brenngaskanal regelnd ausgebildet ist. Sauerstoff- und Brenngaskanal sind durch den in der Kolbenkammer angeordneten, abdichtenden und pneumatisch beaufschlagten Steuerkolben voneinander getrennt. Das Sicherheitsventil kann sich nicht öffnen, also das Brenngas nicht freigeben, wenn der Sauerstoffdruck zu niedrig, ausgefallen oder unterbrochen ist. In diesem Falle gibt der Steuerkolben mit seinem den Brenngaskanal zugewandten Ende diesen nicht frei. Bereits beim Absinken des Sauerstoffdrucks unter eine gewisse vorgegebene Druckgrenze schließt sich das Ventil. Dem Steuerkolben ist an seinem dem Brenngaskanal zugewandten Ende ein gegen den Brenngaskanal abdichtender Dichtring zugeordnet, der im Bereich der Brenngaskanals fixiert und korrespondierend zum Ende des Steuerbolzens ausgebildet ist. Es ist auch denkbar, den Dichtring am Ende des Steuerbolzens zu fixieren. Auch der Steuerkolben ist gegen eine an seinem den Brenngaskanal abgewandten Ende angreifende Druckfeder verschieblich ausgebildet. Bei Druckbeaufschlagung des Kolbenrings wird der Steuerkolben gegen die Kraft dieser Druckfeder vom Brenngaskanal weggedrückt bzw. mit seinem Ende aus diesem heraus bewegt. Durch die dabei bedingte Verschiebung des Steuerkolbens in Richtung der Druckfeder kann das im Brenngaskanal am Dichtring des Steuerkolbens anstehende Brenngas strömen.

Ein besonderer Vorteil der Erfindung liegt darin, dass das Sicherheitsventil nur eine Einstellvorrichtung, vorzugsweise in Form eines Drehbolzens aufweist, welcher auf Sauerstoffeinlass und Brenngaseinlass mengenregulierend einwirkend angeordnet und ausgebildet ist. Der Drehbolzen ist in Strömungsrichtung des Gases gesehen vor dem Steuerorgan angeordnet und dient als eine Art Justiereinrichtung für die Regulierung der Durchströmmengen von Sauerstoff oder Sauerstoff und Brenngas. Bei diesem Drehbolzen handelt es sich um ein funktionstechnisch vom Steuerorgan getrenntes Bauteil, das unabhängig vom durch den Sauerstoff bewirkten Druck funktionieren kann. Damit wird eine Art
"Memory"-Funktion realisiert, die sich beliebig oft wiederholen und einstellen lässt, ohne die Gasgemisch-Einstellung beim Öffnen und Schließen des Sicherheitsventils verändern zu müssen. Durch diese Justiereinrichtung wird nach der Einstellung der Schneidbrennflamme durch die jeweilige stärkere bzw. schwächere Drosselung des Sauerstoffgases die Flammeneinstellung auch nach Wiederaufnahme der Arbeit und dem erneuten Aufdrehen des Sicherheitsventils nicht verändert. Das bereits im vorherigen Arbeitsgang gewählte Gasgemisch stellt sich unverändert wieder ein. Die Querschnittsveränderung im Sauerstoffkanal und die dadurch letztlich bewirkte Brenngasdosierung kann auch in Bezug auf verschiedene Gasmischungsverhältnisse bei diversen Arbeiten wieder eingestellt werden.

Um zu gewährleisten, dass bei deren Betätigung eine Mindestmenge an Brenngas und Sauerstoff an der Regeleinrichtung vorbeiströmt, ist vorgesehen, dass der Drehbolzen in Längsbewegungsrichtung eine Verzahnung oder Verrastung aufweist. Bei Betätigung des Drehbolzens muss dieser also ein Stück herausgezogen werden.

Ergänzend dazu wird vorgeschlagen, dass der Drehbolzen im Bereich von Sauerstoffeinlass und/oder Brenngaseinlass eine Verjüngung und/oder eine Ringnut aufweist. Diese Ringnut ist im Bereich des Brenngaskanals gegenüber der im Sauerstoffkanal verstärkt ausgebildet.

Das Wiederherstellen eines einmal gewählten Sauerstoff-/Brenngasgemisches wird dadurch ermöglicht, dass dem Ventilgehäuse eine Skala und dem Drehbolzen eine zu dieser Skala korrespondierende Anzeige zugeordnet ist. Die Skala kann mit entsprechenden Zahlen oder Mischverhältnissen gekennzeichnet sein oder auch auf bestimmte Schweißvorgänge, beispielsweise für bestimmte Materialien oder bestimmte Brenngase, wie Acethylen, Wasserstoff oder dergl. hinweisen. Auch eine Nachkorrektur des Mischungsverhältnisses zwischen Sauerstoff und Brenngas ist mittels dieser Justiereinrichtung sowie der Skala denkbar einfach.

Die Erfindung zeichnet sich insbesondere dadurch aus, dass ein Sicherheitsventil für die Sauerstoff- und Brenngasversorgung eines Schneid- bzw. Schweißbrenners geschaffen ist, bei der die Brenngaszufuhr pneumatisch geregelt und überwacht wird. Bei nicht ausreichendem oder bei abfallenden Sauerstoffdruck wird die Brenngaszufuhr automatisch unterbrochen, so dass die Gefahr des Zurückschlagens der Flamme in den Brenner nicht besteht. Dieser Zustand hält solange an, bis wieder ausreichend Sauerstoffdruck vorhanden ist, um eine einwandfreie und sichere Funktion des Brenners zu gewährleisten. Gewissermaßen wird dadurch die Brenngaszufuhr durch die Sauerstoffzufuhr überwacht. Damit ist zum einen gewährleistet, dass die Strömungsreihenfolge, Sauerstoff vor Brenngas beim Aufdrehen, und Brenngas vor Sauerstoff beim Zudrehen, stets eingehalten wird. Zum anderen können einmal gewählte Gasgemisch-Einstellungen beliebig häufig wiederholt werden, was ebenso wie eine Nachregulierung des Gasverhältnisses denkbar einfach möglich ist.

Weitere Einzelheiten und Vorteile des Erfindungsgegenstandes ergeben sich aus der nachfolgenden Beschreibung der zugehörigen Zeichnung, in der ein bevorzugtes Ausführungsbeispiels mit den dazu notwendigen Einzelheiten und Einzelteilen dargestellt ist. Es zeigen:
- Fig. 1: ein Sicherheitsventil in perspektivischer Ansicht,
- Fig. 2: ein Sicherheitsventil mit einer Membrane als Steuerorgan im Schnitt,
- Fig. 3: ein Sicherheitsventil mit einem Steuerkolben als Regel organ im Schnitt durch den Sauerstoffkanal,
- Fig. 4: das Sicherheitsventil nach Fig. 3 im Schnitt durch den Brenngaskanal,
- Fig. 5: ein Sicherheitsventil in Draufsicht,
- Fig. 6: ein Sicherheitsventil in Seitenansicht und
- Fig. 7: ein Sicherheitsventil als Zwischenventil für lange Versorgungsleitungen.

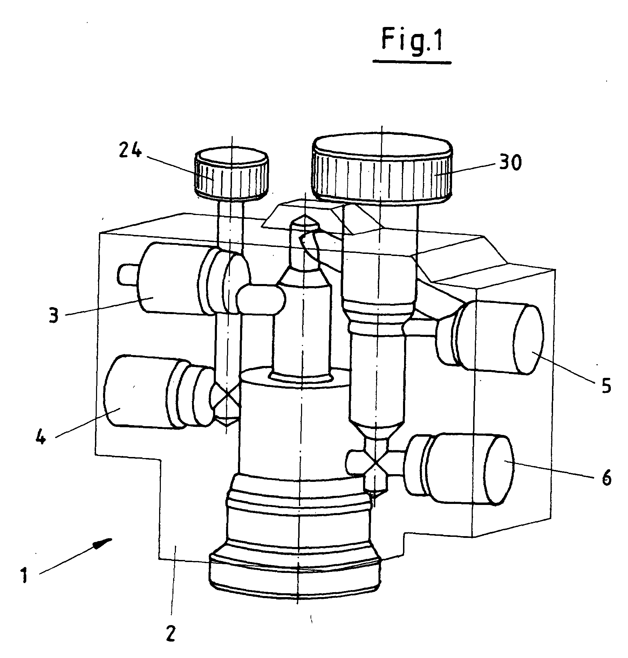

Fig. 1 zeigt ein Ventilgehäuse 1 in perspektivischer Ansicht mit Sauerstoffeinlass 3 und Brenngaseinlass 5 auf der einen sowie Sauerstoffauslass 5 und Brenngasauslass 6 auf der anderen Seite. Sauerstoffeinlass 3 und Sauerstoffauslass 5 sind durch einen Sauerstoffkanal und Brenngaseinlass 4 und Brenngasauslass 6 durch einen Brenngaskanal miteinander verbunden, eine Sauerstoffleitung wäre also entsprechend an Sauerstoffeinlass 3 und Sauerstoffauslass 5 und eine Brenngasleitung am Brenngaseinlass 4 und am Brenngasauslass 6 anzuschließen. Auch auf die Darstellung des Schneidbrenners bzw. einer Mischdüse, die ohne weitere Einstell- oder Justiereinrichtungen auskommen kann, wurde hier verzichtet. Das Ventilgehäuse 2 weist dazu einen Drehbolzen 30 zur Einstellung des Gasgemisches und ein Steuerorgan 24 zum Ein- und Ausschalten des Sicherheitsventils 1 auf. Zum Öffnen des Sicherheitsventils 1 wird zunächst durch Drehen des Steuerorgans 24 der im Sicherheitsventil 1 anstehende Sauerstoff freigegeben, der dann aus der hier nicht dargestellten Schneidbrenndüse entweichen kann. Mit zeitlicher Verzögerung wird nun der Öffnungsvorgang im Brenngaskanal 8 bewirkt, woraufhin dieses nun ebenfalls aus der Düse des Schneidbrenners austritt und das Sauerstoff-/Brenngasgemisch entzündet werden kann. Beim Schließen des Sicherheitsventils 1 wird zuerst der Brenngaskanal 8 geschlossen, so dass die Schneidflamme erlischt und aus der Schneidbrenndüse des hinter dem Sicherheitsventil 1 angebrauchten Schneidbrenners nur noch Sauerstoff austritt. Mit entsprechender zeitlicher Verzögerung wird dann die Strömung des Sauerstoffs an der Schneidbrenndüse des Schneidbrenners dann auch beendet.

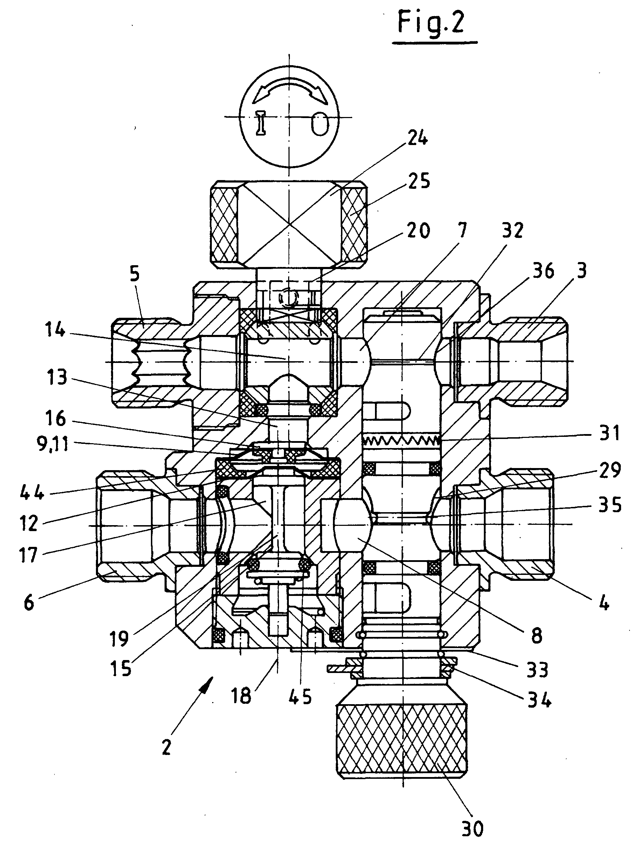

Fig. 2 zeigt ein Ventilgehäuse 2 im Längsschnitt. Dabei sind wiederum die vier Anschlüsse, Sauerstoffeinlass 3, Brenngaseinlass 4, Sauerstoffauslass 5, Brenngasauslass 6 zu erkennen. Diese sind jeweils durch den Sauerstoffkanal 7 sowie den Brenngaskanal 8 miteinander verbunden. Letztere sind wiederum durch die Verbindungskammer 13, die auch als Verbindungskanal bezeichnet werden könnte, verbunden. Im Gegensatz zur Darstellung nach Fig. 1 ist der Drehbolzen 30 hier anders herum orientiert, also am dem Sperrdrehbolzen 24 gegenüberliegenden Ende des Ventilgehäuses 2 vorgesehen.

Beim Einschalten des Steuerorgans 24, der hier als Sperrdrehbolzen 25 ausgebildet ist, öffnet sich ein hier nicht dargestelltes Kugelventil im Bereich des Übergangs 14 zwischen Sauerstoffkanal 7 und Verbindungskammer 13. Dabei gelangt der Sauerstoff zum einen durch den Sauerstoffauslass 5 aus dem Ventilgehäuse 2 heraus und zum anderen in die Verbindungskammer 13. Mit steigendem Sauerstoffdruck verformt sich dabei die in der Verbundungskammer 13 angeordnete Membrane 11, die im Zusammenspiel mit der weiteren Membrane 12 geringeren Durchmessers als Trennung zwischen Sauerstoffkanal 7 und Brenngaskanal 8 fungiert. Zwischen den Membranen 11, 12 ist ein Abstandsring 44 vorgesehen. Im Bereich der Mitte der Membrane 11 ist ein Verstellknopf 16 zu erkennen, der zur besseren Kraftübertragung bei der Verformung der Membrane 11 in Folge des anstehenden Sauerstoffdrucks auf die weitere Membrane 12 bzw. das Brenngaskanalventil 15 dient. Ist der zuvor eingstellte Mindestsauerstoffdruck erreicht, bei dem der Brenngaskanal 8 zum Durchströmen des Brenngases freigegeben werden soll, so wird aufgrund der Deformierung der Membrane 11, unterstützt durch den Verstellknopf 16, das Brenngaskanalventil 15 in Richtung seiner Längsachse 18 gegen die Kraft einer hier nicht dargestellten Feder verschoben. Das Brenngaskanalventil 15 ist in einer Ventilhülse 17, die im Brenngaskanal 8 sitzt, verschieblich gelagert. Indem der Ventilstößel 19 seine Position im Bereich des Brenngaskanals 8 nun verlässt, kann zwischen Ventilhülse 17 und Dichtring 45 nun Brenngas durch den Brenngaskanal 8 in Richtung Brenngasauslass 6 strömen. Aufgrund des ausreichenden Sauerstoffdruckes wird also das Brenngaskanalventil 15, das zuvor den Brenngaskanal 8 blockiert hat, aus dieser Position herausgeschoben und gibt nun den Brenngaskanal frei, so dass im Bereich der Mischdüse nun die Flamme entzündet werden kann.

Sollte der Sauerstoff nun einen gewissen Mindestdruck unterschreiten, verformt sich die Membrane 11 wieder Richtung Sauerstoffkanal 7 zurück, so dass das Brenngaskanalventil 15 wieder seine ursprüngliche Position, in der es den Brenngaskanal 8 blockiert, einnimmt; die Brenngaszufuhr ist abgeschnitten. Es ist also stets gewährleistet, dass Sauerstoff und Brenngas in der richtigen Reihenfolge öffnen und geschlossen werden, unabhängig davon, ob dies beabsichtigt ist oder ob es sich um einen Defekt in Folge unterbrochener Sauerstoffzufuhr handelt. Das Steuerorgan 9, also die Membrane 11 bzw. beide Membranen 11, 12 bewirkt, dass dieses Abschalten auch mit besonders hoher Geschwindigkeit stattfinden kann, da es besonders sensibel ausgebildet ist. Unterstützt wird diese Wirkung durch Entlüftungsbohrungen 20, die im Bereich des Stauerstoffkanals 4 vorhanden sind. Wenn die Membranen 11, 12 sich zurückverformen, wird der Sauerstoff gewissermaßen aus dem Sauerstoffkanal 4 herausgedrückt.

Zu erkennen ist weiterhin der Drehbolzen 30 als Regel- oder Justiereinrichtung. Der Drehbolzen 30 weist im Bereich von Sauerstoffeinlass 3 und/oder Brenngaseinlass 4 eine Verjüngung 29, 36 und zusätzlich Ringnuten 29, 32 auf. Dabei ist die Ringnut 35 im Bereich des Brenngaseinlasses 4 im Vergleich zu Ringnut 32 im Bereich des Sauerstoffeinlasses 5 größer ausgebildet. Damit soll gewährleistet werden, dass stets ein Mindestmaß an Gas strömen kann. Der Drehbolzen 30 weist eine Verzahnung 31 auf, aus der der Drehbolzen 30 bei seiner Betätigung herausgezogen wird. Der Drehbolzen 30 weist eine Anzeige 34 auf, die korrespondierend zu eine Skala 33 auf dem Ventilgehäuse 2 ausgebildet ist. Damit lässt sich eine Art "Memory"-Funktion einstellen, indem ein einmal gewähltes Mischverhältnis unabhängig vom Steuerorgan 24 jederzeit wieder eingestellt werden kann.

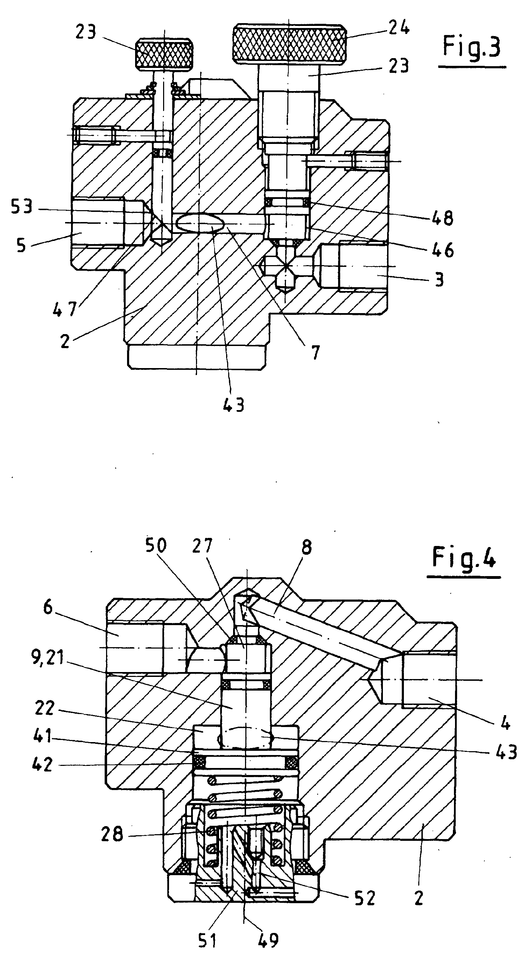

In den Darstellungen gemäß der Fig. 3 und 4 sind Brenngaskanal 8 und Sauerstoffkanal 7 mit den entsprechenden Bauteilen versetzt zueinander angeordnet. Daher zeigt Fig. 3 die für den Sauerstoff zuständigen Einrichtungen, wie den Sauerstoffeinlass 3, den Sauerstoffkanal 7 und den Sauerstoffauslass 5. Dem Steuerorgan 24 ist dabei ein Gewinde 46 zugeordnet, so dass sich dieses bei Betätigung von seinem Sitz am Dichtring 48 am Sauerstoffkanal 7 löst. Dadurch wird der Sauerstoffkanal 7 geöffnet, so dass der am Sauerstoffeinlass 3 anstehende Sauerstoff in Richtung Sauerstoffauslass 5 strömen kann. Die Verstelleinrichtung 23 regelt den Durchfluss durch den Sauerstoffkanal 7 und somit letztlich auch den dazu in Abhängigkeit stehenden Brenngasdurchfluss. Sie ist im Bereich zwischen Steuerkolben und Sauerstoffauslass 5 angeordnet und weist an ihrem dem Sauerstoffkanal 7 zugewandten Ende 47 eine vorzugsweise in einem Winkel von 45° verlaufende Schräge 53 auf. Je nachdem in welchem Winkel die Verstelleinrichtung 23 positioniert ist, ergibt sich der zum Strömen des Sauerstoffs zur Verfügung stehende Querschnitt des Sauerstoffkanals 7. Die Verstelleinrichtung 23 ist funktionstechnisch völlig unabhängig von dem Steuerorgan 24. Der Sauerstoffdruck steht dabei im Bereich der hier oval dargestellten Öffnung 43 an. Durch diesen Druck wird der Steuerkolben in Richtung seiner Längsachse hin- und herbewegt.

Fig. 4 zeigt den Schnitt durch Brenngaszuführung und Kolbenkammer 22. Der Sauerstoffdruck steht im Bereich der Öffnung 43 an, wodurch der Steuerkolben 21, als welcher hier das Steuerorgan 9 ausgebildet ist, in Richtung seiner Längsachse 49 hinund herbewegt wird. Bei nicht ausreichendem Sauerstoffdruck blockiert der Steuerkolben 21 mit seinem dem Brenngaskanal 8 zugewandten Ende 27 den Brenngaskanal 8. Ist ausreichender Sauerstoffdruck vorhanden, so dass ausgeschlossen ist, dass es zu einem Rückschlag einer Brenngasflamme an der Schneidbrennerdüse kommen kann, verschiebt sich der Steuerkolben 21 in seiner Längsrichtung gegen die Kraft der Druckfeder 28. Kolbenring 41 und Dichtring 42 gewährleisten eine Abdichtung zwischen Sauerstoffkanal 7 und Brenngaskanal 8, so daß der Sauerstoffdruck allein über den Steuerkolben 21 übertragen wird. Dabei wird der Brenngaskanal 8 freigegeben und das Brenngas kann strömen. Der Steuerkolben 21 löst sich dann von seinem Sitz am Dichtring 50. Sollte es zu einer erheblichen Minderung des Sauerstoffdrucks oder gar zu einem Ausfall kommen, nimmt der Steuerkolben 21 automatisch wieder seine blockierende Position ein. Dass es dabei nicht zu einem Unterdruck im Bereich des die Drehfeder 28 umgebenden Teiles der Kolbenkammer 22 kommen kann, bewirkt das in der Stellschraube 51 angeordnete Rückschlagventil 52. Die Brenngaszufuhr wird schnell abgesperrt, da der Unterdruck ausgeglichen wird.

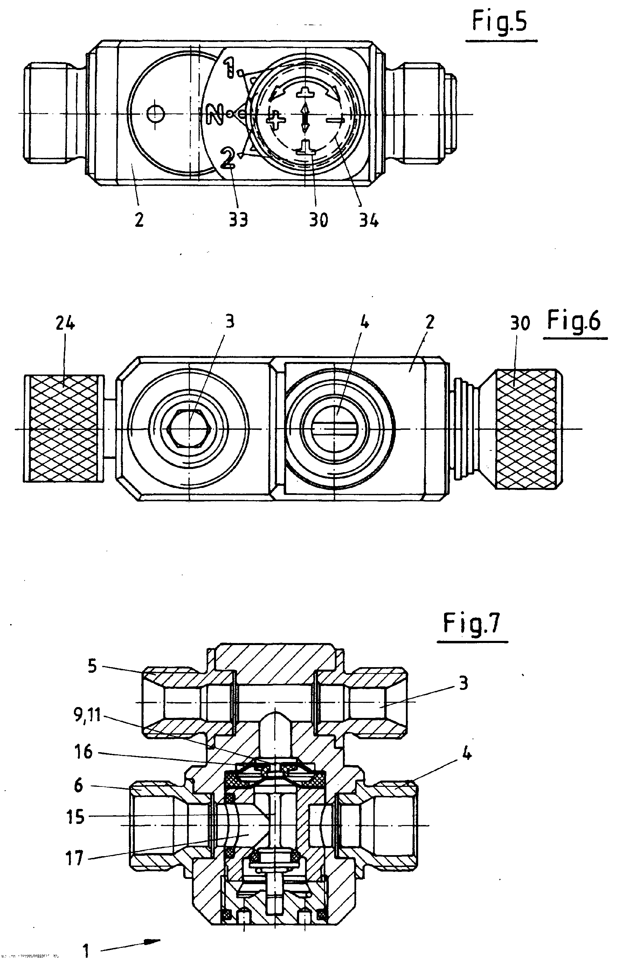

Fig. 5 zeigt ein Ventilgehäuse 2 mit Anzeige 34 und Skala 33, womit ein einmal eingegebenes Gasmischverhältnis jederzeit auf denkbar einfache Weise wieder eingestellt werden kann, indem das korrekte Verhältnis zwischen Brenngas und Sauerstoff stets wieder erreicht wird.

Fig. 6 zeigt ein Ventilgehäuse 2 in Seitenansicht, hier mit dem Sauerstoffeinlass 3 und dem Brenngaseinlass 4 sowie dem Steuerorgan 24 und dem Steuerorgan 30, welche im Gegensatz zur Darstellung in Fig. 3 und 4 hier an gegenüber liegenden Enden des Ventilgehäuses 2 angeordnet sind.

Fig. 7 zeigt ein als Zwischenventil ausgebildetes Sicherheitsventil 1, welches besonders geeignet ist, bei langen Brenngas- und Sauerstoffversorgungsleitungen eingesetzt zu werden. Ohne zusätzliche Steuer- oder Regeleinrichtungen reguliert sich hier das Mischverhältnis von selbst bzw. bricht die Brenngasversorgung ab, falls der notwendige Mindestsauerstoffdruck absinken sollte. Als Steuerorgan 9 ist hier wiederum eine Membrane 11 vorgesehen, die sich bei ausreichendem Sauerstoffdruck in Richtung Brenngaskanal 8 verschiebt, woraufhin das Brenngaskanalventil 15 seinen Sitz und damit den Brenngaskanal 8 freigibt. Sollte es also bei einer solch langen Versorgungsleitung zu einem Schaden kommen, kehrt die Membrane 11 und damit das Brenngaskanalventil 15 in die Ausgangsposition zurück, so dass die Brenngaszufuhr abgebrochen wird.

Alle genannten Merkmale, auch die den Zeichnungen allein zu entnehmenden, werden allein und in Kombination als erfindungswesentlich angesehen.

## Patentansprüche

1. Sicherheitsventil (1) für die Sauerstoff- und Brenngasversorgung eines Schneid- bzw. Schweissbrenners, dessen Ventilgehäuse (2) einen Sauerstoffeinlass (3) und einen damit über einen Sauerstoffkanal (7) verbundenen Sauerstoffauslass (5) sowie einen Brenngaseinlass (4) und einen damit über einen Brenngaskanal (8) verbundenen Brenngasauslass (6) aufweist,
**dadurch gekennzeichnet,**
dass zwischen Sauerstoffkanal (4) und Brenngaskanal (5) ein Steuerorgan (9) vorgesehen ist, welches den Brenngaskanal (8) in Abhängigkeit vom herrschenden Sauerstoffdruck öffnend angeordnet und ausgebildet ist.

2. Sicherheitsventil nach Anspruch 1,
**dadurch gekennzeichnet,**
dass als Steuerorgan (9) mindestens eine Membrane (11) vorgesehen ist, welche in einer Verbindungskammer (13) oder einem Verbindungskanal zwischen Sauerstoffkanal (7) und Brenngaskanal (8) angeordnet ist, wobei die Membrane (11) auf ein im Brenngaskanal (5) angeordnetes Brenngaskanalventil (15) einwirkend ausgebildet ist.

3. Sicherheitsventil nach einem der vorhergehenden Ansprüche,
**dadurch gekennzeichnet,**
dass im Bereich der Mitte der Membrane (11) ein auf das Brenngaskanalventil (15) einwirkender Verstellknopf (16) vorgesehen ist.

4. Sicherheitsventil nach einem der vorhergehenden Ansprüche,
**dadurch gekennzeichnet,**
dass zwischen Verstellknopf (16) und Brenngaskanalventil (15) eine weitere, dem Brenngaskanalventil (15) zugeordnete Membrane (12) vorgesehen ist.

5. Sicherheitsventil nach einem der vorhergehenden Ansprüche,
**dadurch gekennzeichnet,**
dass im Bereich des Übergangs (14) zwischen Sauerstoffkanal (4) und Verbindungskammer (13) ein Kugelventil angeordnet ist, welches über ein Steuerorgan (24), vorzugsweise einen Sperrdrehbolzen (25) betätigbar ist.

6. Sicherheitsventil nach einem der vorhergehenden Ansprüche,
**dadurch gekennzeichnet,**
dass das Brenngaskanalventil (15) in Längsverschiebungsrichtung federnd gelagert ist.

7. Sicherheitsventil nach einem der vorhergehenden Ansprüche,
**dadurch gekennzeichnet,**
dass das Brenngaskanalventil (15) gegenüber einer Ventilhülse (17) verschieblich geführt ist, die im Bereich des Brenngaskanals (5) angeordnet ist.

8. Sicherheitsventil nach einem der vorhergehenden Ansprüche,
**dadurch gekennzeichnet,**
dass der Sauerstoffkanal (4) Entlüftungsbohrungen (20) aufweist.

9. Sicherheitsventil nach einem der vorhergehenden Ansprüche,
**dadurch gekennzeichnet,**
dass als Steuerorgan (9) ein Steuerkolben (21) vorgesehen ist, welcher in einer Kolbenkammer (22) zwischen Sauerstoffkanal (7) und Brenngaskanal (8) angeordnet ist und welcher mit seinem dem Brenngaskanal (8) zugewandten Ende (27) den Durchfluß im Brenngaskanal (8) regelnd ausgebildet ist.

10. Sicherheitsventil nach einem der vorhergehenden Ansprüche,
**dadurch gekennzeichnet,**
dass der Steuerkolben (21) gegenüber einer Druckfeder (28) verschieblich ausgebildet ist.

11. Sicherheitsventil nach einem der vorhergehenden Ansprüche,
**dadurch gekennzeichnet,**
dass das Sicherheitsventil eine Einstellvorrichtung, vorzugsweise in Form eines Drehbolzens (30) aufweist, welcher auf Sauerstoffeinlass (3) und Brenngaseinlass (4) mengenregulierend einwirkend angeordnet und ausgebildet ist.

12. Sicherheitsventil nach einem der vorhergehenden Ansprüche,
**dadurch gekennzeichnet,**
dass der Drehbolzen (30) in Längsbewegungsrichtung eine Verzahnung (31) oder Verrastung aufweist.

13. Sicherheitsventil nach einem der vorhergehenden Ansprüche,
**dadurch gekennzeichnet,**
dass der Drehbolzen (30) im Bereich von Sauerstoffeinlass (3) und/oder Brenngaseinlass (4) eine Verjüngung (29) und/oder eine Ringnut (32,35) aufweist.

14. Sicherheitsventil nach einem der vorhergehenden Ansprüche,
**dadurch gekennzeichnet,**
dass dem Ventilgehäuse (2) eine Skala (33) und dem Drehbolzen (30) eine zu dieser Skala (33) korrespondierende Anzeige (34) zugeordnet ist.
